# EUROPÄISCHE PATENTSCHRIFT

(11) **EP 1 406 488 B1**
(45) Veröffentlichungstag und Bekanntmachung des Hinweises auf die Patenterteilung: **16.08.2017**
(21) Anmeldenummer: 02747293.5
(22) Anmeldetag: 24.04.2002
(51) Int. Cl.: A01K 63/04, C02F 3/28

(54) **NITRATENTFERNUNG AUS AQUARIENWASSER**
DENITRIFICATION OF AQUARIUM WATER
DENITRIFICATION DES EAUX D'AQUARIUMS

(30) Priorität: 26.04.2001 DE 10120421
(43) Veröffentlichungstag der Anmeldung: 14.04.2004
(73) Patentinhaber: Tetra GmbH, 49304 Melle (DE)
(72) Erfinder: RITTER, Günter, 32257 Bünde (DE)
(74) Vertreter: Zimmermann & Partner Patentanwälte mbB
(86) Internationale Anmeldenummer: PCT/EP2002/004478
(87) Internationale Veröffentlichungsnummer: WO 2002/094015

(56) Entgegenhaltungen:
- DE-A- 3 516 617
- DE-A- 19 813 022
- US-A- 5 316 832
- A. BOLEY, W.-R. MÜLLER, G. HAIDER: "Biodegradable polymers as solid substrate and biofilm carrier for denitrification in recirculated aquaculture systems" AQUACULTURAL ENGINEERING, Bd. 22, - 2000 Seiten 75-85, XP002217355 Elsevier Science B.V.
- PATENT ABSTRACTS OF JAPAN vol. 1998, no. 11, 30. September 1998 (1998-09-30) & JP 10 165733 A (MATSUSHITA ELECTRIC IND CO LTD), 23. Juni 1998 (1998-06-23)
- PATENT ABSTRACTS OF JAPAN vol. 1998, no. 11, 30. September 1998 (1998-09-30) & JP 10 165177 A (MARUYAMA SUSUMU), 23. Juni 1998 (1998-06-23)

## Beschreibung

Die Erfindung betrifft die Verwendung eines Mittels zur Entfernung bzw. Reduktion anorganischer Stickstoffverbindungen, insbesondere Nitrat, aus biologischen Hälterungswässern enthaltend ein biologisch abbaubares Polymer, nämlich Polycaprolacton (PCL).

In aquaristischen Hälterungssystemen verursacht die tägliche Fütterung der Fische und anderer Wasserorganismen eine regelmäßige Einbringung von organischen Stickstoffverbindungen.

In den hauptsächlich aerob arbeitenden Filtersystemen werden die eingebrachten bzw. ausgeschiedenen organischen Stickstoffverbindungen über die Intermediärstufen Ammoniak/Ammonium und Nitrit, deren Konzentration niedrig bleibt, zu Nitrat abgebaut.

Da in den aquaristischen Hälterungssystemen die Denitrifikationsaktivität meist erheblich niedriger ist als die Nitrifikationsaktivität, kommt es zu einem ständigen Anstieg der Nitratkonzentration.

Das Nitrat-Anion ist zwar nur sehr wenig toxisch für Fische, man ist aber dennoch bestrebt, den Nitratanstieg zu verlangsamen bzw. die Nitratkonzentration niedrig zu halten.

Neben Ionenaustauschverfahren zur Nitratsenkung, die aber sekundäre unerwünschte Effekte bewirken, wird das Verfahren der Denitrifikation eingesetzt. Die Denitrifikation ist an weitgehend anaerobe Verhältnisse und die Anwesenheit von abbaubaren Kohlenstoffverbindungen geknüpft.

Da die Bildung von Nitrat über die Nitrifikation nahezu kontinuierlich abläuft, ist es sinnvoll, auch die Denitrifikation quasi kontinuierlich ablaufen zu lassen. Die täglich nur in geringer Konzentration hinzukommende Nitratmenge erlaubt es, auch bei der Denitrifikation auf große Stoffumsätze zu verzichten. Schwerlösliche organische, biologisch abbaubare Polymere sind daher als langsam reagierende C-Quellen sehr gut geeignet.

Bislang sind folgende Verfahren bekannt, die BAP (Biologisch abbaubare Polymere) einsetzen:
a) Granulate und Spritz-/Formteile aus Polyhydroxybutyrat (PHB), diezur Schaffung anaerober Abbaubedingungen in den Bodengrund der Aquarien eingebracht werden. PHB wird von speziellen Bakterienspecies als Energiereservestoff aufgebaut und in die Zellen eingelagert. Als natürliches Material ist es daher gut abbaubar. Andere BAP wurden in der Aquaristik nicht verwendet.
b) Boley, Müller et al. setzten Granulate von PHB und Polycaprolacton (PCL) in speziellen Anaerobreaktoren ein unter streng aneroben Reaktionsbedingungen, die zur O₂-Limitierung nur einen sehr kleinen Durchfluß (0,3 - 0,5 I/h) aufwiesen, um Nitrat abzubauen. Die verwendeten Mengen an Granulat betrugen ca. 280 - 380 g pro 100 I, d. h. waren sehr hoch.

Aus der DE 96 19 016 U1 ist ein biologisch abbaubares Kunststoffprodukt enthaltend Polycaprolacton bekannt.

In der DE 198 13 922 A1 ist ein Aufwuchskörper zur Immobilisierung von Mikroorganismen beschrieben, insbesondere zur Verwendung in AbwasserReinigungsanlagen, bestehend aus einer Matrix, in welche ein biologisch abbaubares Substrat (zum Beispiel PHB oder PHV) inkorporiert ist, bei dem die Matrix aus einem biologisch abbaubaren Biopolymer (zum Beispiel Polycaprolacton) besteht, welches erheblich langsamer abbaubar ist, als das Substrat, und in welches das Substrat in Form von mit Abstand zueinander angeordneten Teilchen eingebettet ist.

Die hierin beschriebenen Mittel, Materialien bzw. Verfahren bieten im Vergleich zum Stand der Technik bedeutende Vorteile und/oder auch für den Fachmann überraschende funktionale und mechanistische Verbesserungen.

Gegenüber dem beschriebenen Stand der Technik bietet der nicht beanspruchte Einsatz von Granulaten aus Polycaprolacton (PCL) folgende gravierende Vorteile:
Wesentlich bessere industrielle Verfügbarkeit, da zur Zeit kein Massenproduzent für PHB existiert.

Wesentliche Preisvorteile, da PHB gegenüber PCL ca. 2 bis 3,5 mal teuerer ist.

In einem Vergleichsversuch wurden in Aquarien 70 g PCL-Granulat (runde bis ovale Kugeln, Durchmesser ca. 4 mm, Gehalt > 99 % Polycaprolacton) pro 100 I Aquariumwasser mit 10 bis 20 I Bodengrund bestehend aus
a) Sand (< 1 mm)
b) feinem Kies (φ 1 - 2 mm)
c) mittelgrober Kies (φ 2 - 3 mm)
vermischt und der Nitratanstieg des mit Fischen besetzten, täglich gefütterten Aquariums über einen Zeitraum von 3 Monaten gemessen.

Als Vergleich diente ein nicht mit PCL behandeltes Aquarium.

Die folgende Abstufung der Versuchsergebnisse war nach dem Stand der Technik überraschend und wäre gerade mit umgekehrtem Trend erwartet worden:

### a) Sand (φ 1 mm)

Der Nitratgehalt stieg im Kontrollaquarium im Versuchszeitraum von 49 mg/l auf 128 mg/l; im mit PCL behandeltem Aquarium war nur eine schwache Nitratsenkung erkennbar. Das Nitrat stieg von 49 mg/l auf 109 mg/l an.

### b) Feiner Kies (φ 1 - 2 mm)

Der Nitratabbau war erheblich intensiver:
Von anfangs 49 mg/l stieg die Nitratkonzentration auf 74 mg/l an, in der Kontrolle auf 135 mg/l.

### c) Mittelgrober Kies (φ 2 - 3 mm)

Hier war die Nitratreduktion noch deutlicher ausgeprägt:
Von anfangs 49 mg/l war sogar eine Nitratsenkung auf nur 40 mg/l zu erkennen; in der Kontrolle ein Anstieg auf 136 mg/l.

Ein weiterer Versuch mit Kies der Körnung 3 - 5 mm ergab einen Nitratanstieg von anfangs 18 mg/l bis auf 33 mg/l nach 3 Monaten, während die Kontrolle folgende Nitratkonzentrationen aufwies: 18 mg/l auf 104 mg/l. Die sich einstellende Nitratkonzentration lag noch unter dem Wert für mittelgroben Kies (φ 2-3 mm).

Im Gegensatz zu den nicht behandelten Kontrollaquarien, in denen der Nitratgehalt weiter anstieg, blieb in den PCL-behandelten Aquarien nach ca. 2 - 3 Monaten der Nitratgehalt konstant auf einem von der PCL-Dosierung abhängigen Niveau.

Mischt man PCL-Granulat von ca. 4 mm Durchmesser in feinen (φ 1 - 2 mm), besser noch in mittelgroben (φ 2 - 3 mm) oder sogar groben Kies (φ 3 - 5 mm) ein, so stellen sich in den behandelten Aquarien in Abhängigkeit vom Bodengrund bei verschiedenen PCL-Dosierungen im Zeitraum von 3 Monaten folgende Nitratkonzentrationen ein:
1) Verschiedene Bodengrundtypen, PCL-Dosierung: 70 g/100 I Wasser:
   a) Sand (φ < 1 mm) - Anstieg von 49 auf 109 mg/l NO₃
   b) Feiner Kies (φ 1 - 2 mm) - Anstieg von 49 auf 74 mg/l NO₃
   c) Mittelgrober Kies (φ 2 - 3 mm) - Konstanz bis Abfall im Bereich 47 über 27 bis 40 mg/l NO₃⁻
   d) Grober Kies (φ 3 - 5 mm) - Anstieg von 18 auf 33 mg/l NO₃⁻
2. Grober Kies (φ 3 - 5 mm) mit verschiedenen PCL-Dosierungen nach 3 Monaten:
   a) 0 g/100 I PCL: Anstieg von 18 mg/l auf 104 mg/l NO₃⁻
   b) 25 g/100 I PCL: Anstieg von 18 mg/l auf 86 mg/l NO₃⁻
   c) 50 g/100 I PCL: Anstieg von 18 mg/l auf 60 mg/l NO₃⁻
   d) 100 g/100 I PCL: Reduktion von 18 mg/l auf 8 mg/l NO₃⁻

Das nicht beanspruchte Verfahren zur Nitratlimitierung, -kontrolle und -senkung durch Mischen von PCL-Granulat mit feinem bis grobem Kies läßt sich sehr einfach durchführen durch einfaches Einmischen des PCL-Granulates in den Bodengrund des aquaristischen Hälterungssystems.

Die Anwendung braucht nur alle 6 - 12 Monate wiederholt zu werden. Es wirkt sich vorteilhaft auf die Wasserqualität aus, daß anaerobe Bedingungen im grobkörnigen, gut wasserdurchströmten Bödengrund nicht erforderlich sind und auch durch das Verfahren nicht erzeugt werden. Anaerobe Fäulnisprozesse und die H₂S-Freisetzung durch Sulfatreduktion können dadurch vermieden werden.

Das Wachstum der im Bodengrund wurzelnden Wasserpflanzen wird dadurch nicht negativ beeinträchtigt, sondern sogar deutlich gefördert.

Als vorteilhaft haben sich folgende Dosierungen von PCL-Granulat (φ ca. 4 mm) zum Einmischen in feinen bis groben Kies erwiesen, nämlich 20 g/100 I Wasser bis 200 g/100 I Wasser, vorzugsweise 60 - 120 g/100 I Wasser.

Da PCL nicht auf anaerobe Reaktionsbedingungen angewiesen ist kommt als weitere Möglichkeit auch die Verwendung von PCL-Granulat in aeroben Filtersystemen in Betracht.

Nach dem oben genannten Stand der Technik wurde PCL-Granulat im Gemisch mit PHB-Granulat in speziellen, im Nebenstrom arbeitenden Anaerobreaktoren mit sehr kleinem Durchfluß (0,3 - 0,5 I/h) und hoher Dosierung (280 - 380 g/100 l) zum anaeroben Nitratabbau eingesetzt.

Es war daher völlig überraschend und nach dem Stand der Technik völlig unerwartet, daß sich PCL-Granulat (φ ca. 4 mm) auch unter aeroben Bedingungen, d. h. in Filterkammern oder Filtereinheiten im Hauptstrom (mit O₂-gesättigtem Wasser) bei hohen Durchflußraten von 20 - 500 l/h vorteilhaft zur Senkung von Nitrat und sogar von Ammonium und Nitrit in aquaristischen Systemen einsetzen läßt.

Die Verwendung von PCL-Granulat als alleiniges Filtermedium in der Filterkammer eines Innenfilters erwies sich jedoch als unzweckmäßig, da bereits nach ca. 2 bis 4 Wochen eine erhebliche Abnahme der Durchflußleistung feststellbar war, sodaß eine Filterfunktion nicht mehr gegeben war. Die Ursache war die Bildung von Schleim um die Granulatkörner, die schließlich zur Bildung einer fast wasserundurchlässigen, zusammengeklebten Filterfüllung aus schleimverklebem PCL führte.

Zwar wurde anfangs durch die beschriebene Anwendung Nitrat aus dem Aquarienwasser entfernt, aber nur solange der Filter noch Durchfluß zeigte, d. h. nach ca 2 bis 4 Wochen kam aus den genannten Gründen auch die Nitratentfernzung zum Erliegen.

Verdünnt man jedoch das PCL-Granulat durch einen Zusatz von 25 - 75 Vol% Kies, bevorzugt in einer Körnung von 2 - 5 mm, und vermischt dieses gründlich, erhält man ein Filtermaterial, welches die bei reinem PCL-Granulat auftretenden Funktionsprobleme nicht mehr aufweist. Die Filterkammer eines Innenfilters wurde mit einer 50:50 Mischung befüllt und das Langzeitverhalten beobachtet. Die Filterwirkung und der Nitratabbau blieb über Monate störungsfrei erhalten.

Die beschriebene PCL/Kies-Mischung sollte auch zur Füllung von anderen Filtersystemen als Filtermaterial geeignet sein, z.B. Außenfilter, Innenfilter mit Filterkammern, Topffiltersysteme usw. Vorteile dieser Filtermischungen sind:
- keine Verklebung durch verbindende Verschleimung
- doppelte Filterwirkung, nälich normale biologische Filterung plus Nitratabbau
- leichter Austausch bei Erschöpfung des Nitratabbaus.

Anstelle von Kies als Verdünnungsmittel für PCL-Granulat in Filterkammern läßt sich selbstverständlich auch jedes andere handelsübliche Filtergranulat bestehend aus natürlichen Stoffen wie Bims, Sandstein, Basalt etc. oder aus Kunststoffen verwendet werden.

Die genannten Probleme beim Einsatz von reinem PCL-Granulat wurden ebenfalls nicht gefunden beim Einsatz von PCL-Granulat in Vlies-Filterbeuteln. Hierbei wurden die Filterbeutel nur teilweise gefüllt mit ca. 20 - 60 % des Gesamtvolumens und alle 4 Wochen erneuert. Da das Auswechseln solcher Filterbeutel sehr einfach ist und in 4 Wochen nur ein kleiner Bruchteil des PCL-Granulats abgebaut wird, wird die PCL-Dosierung praktisch konstant gehalten und damit auch die Leistung der dosierungsabhängigen Nitratsenkung.

Die Dosierungen des PCL-Granulates sind bei der nicht beanspruchten Anwendung erheblich geringer als nach dem Stand der Technik.

Selbst 20 - 40 g/100 I, im Versuch 35 g/100 I, reichen bereits aus, den Nitratanstieg auf 50 - 60 mg/l zu limitieren. Höhere Dosierungen (bis 100 g/100 l) sind noch erheblich effizienter.

Neben Nitrat wird hier bereits auch Ammonium und Nitrit wirkungsvoll aus dem Hälterungssystem entfernt.

Bei dem Einsatz von 100 - 250 g PCL/100 l werden vorhandene Ammonium- und Nitritkonzentrationen innerhalb 0,5 bis 1,0 Wochen auf nahezu 0 mg/l reduziert.

Zur Senkung der Nitratkonzentration wurden folgende Versuche unternommen:
PCL-Granulat wurde in verschiedener Dosierung in wasserdurchlässigen Vliesbeuteln in den Filterhauptstrom eingebracht. Der Wasserdurchfluß betrug 30 - 1000 l/h, bevorzugt 50 - 500 l/h.

Pro 100 l wurden 35 g, 70 g und 105 g PCL in die Vliesbeutel gefüllt.

Während der Versuchszeit von 3 Monaten stellten sich folgende Nitratkonzentrationen ein:
a) Kontrolle (0 g/100 l PCL) - Nitratanstieg von 26 mg/l auf 175 mg/l.
b) 35 g/100 I PCL - Nitratanstieg von 26 mg/l auf 62 mg/l.
c) 70 g/100 I PCL - Nitratsenkung von 26 mg/l auf 20 mg/l.
d) 105 g/100 I PCL - Nitratsenkung von 26 mg/l auf 12 mg/l.

Die dokumentierte Beeinflussung der Nitratkonzentrationen wurde erreicht, obwohl durch die Fütterung des Fischbesatzes ständig Nitrat über die Nitrifikation gebildet wurde (siehe Kontrolle als Vergleich), und obwohl die Wasserbedingungen ständig im aeroben Bereich blieben.

Der aerobe Charakter der Nitratsenkungsmethode geht auch aus der in unseren Studien nicht beobachteten Sulfatreduktion hervor. Der Sulfatgehalt verändert sich in allen Testvarianten ungefähr gleichsinnig:
a) Kontrolle (0 g/100 l PCL) - 113 mg/l auf 146 mg/l.
b) 35 g/100 I PCL - 115 mg/l auf 144 mg/l.
c) 70 g/100 I PCL - 115 mg/l auf 142 mg/l.
d) 105 g/100 I PCL- 114 mg/l auf 143 mg/l.

Ein weiterer positiver Effekt der Wasserbehandlung mit PCL-Granulat wurde bei der biologischen Aktivierung der Nitrifikation festgestellt:

### Versuche zur Senkung der Ammoniak- und Nitritkonzentration:

In den PCL-Aquarien waren die höchsten Zwischenkonzentrationen an Ammoniak und Nitrit wenig bis deutlich geringer als in der nichtbehandelten Kontrolle.

Der positive Nebeneffekt der Senkung der NH₄⁺ und NO₂⁻ Konzentrationen läßt sich mit höherern PCL-Dosierung deutlich intensivieren.

Werden in den Vliesbeuteln, die auch bei der Nitratsenkung eingesetzt wurden, höhere PCL-Dosierung eingesetzt, können vorliegende NH₄⁺- und NO₂⁻ - Konzentrationen (z. B. 0,25 mMol/l) rasch bis nahezu 0 gesenkt werden, und die Bildung von erhöhten NH₄⁺- und NO₂⁻ -Konzentrationen, z. B. während der Aktivierungsphase von frisch aufgestellten Aquarien, zurückgedrängt werden.

Damit ist eine wesentliche Verbesserung der Wasserqualität für Wasserorganismen verbunden.

Dosisabhängig lassen sich folgende überraschend gute Resultate erhalten:
a) 120 g/100 l PCL: 5,0 - 6,0 mg/l NH₄⁺ und 9,0 - 10,0 mg/l NO₂⁻ werden innerhalb einer Woche völlig eliminiert.
b) 240 g/100 l PCL: 5,0 mg/l NH₄⁺ werden innerhalb von 0,5 Wochen praktisch völlig eliminiert, 12,0 mg/l NO₂⁻ innerhalb von 0,5 - 1Woche.

Die beim Aufstellen neuer Aquarien bislang gefürchtete Gefährdung der Fische durch intermediär auftauchende Maximalkonzentrationen an Ammonium und Nitrit läßt sich durch eine geeignete Behandlung mit PCL beseitigen:
Während der ersten 4 - 6 Wochen werden ca. 100 - 250 g/100 l PCL, vorzugsweise 120 - 180 g/100 l PCL in den Filter eingebracht.

Fischgefährdende NH₄⁺- und NO₂⁻ -Konzentrationen werden dadurch sicher vermieden. Im Ausgangswasser herrschende überhöhte Nitratkonzentrationen (z. B. 25 - 100 mg/l NO₃⁻) werden zusätzlich in dieser Phase ebenfalls rasch gesenkt.

Nach 6 Wochen hat sich die natürliche Nitrifikation eingestellt. NH₄⁺- und NO₂⁻ - Konzentrationspeaks sind dann auch mit reduzierten PCL - Mengen ( wie zur Nitratsenkung eingesetzt )nicht mehr zu befürchten.

Danach kann die PCL-Dosierung auf Werte zurückgenommen werden, z. B. 50 - 80 g/100 I, die für die bleibende Minimierung des Nitratpegels ausreichend sind.

Weitere Effekte der Behandlung von aquaristischen Systemen mit PCL Neben den unter 3. beschriebenen Mittel, Verfahren und Methoden zur Konzentrationssenkung bzw. Eliminierung von Nitrat und anderen anorganischen Spezies (NH₄⁺/NH₃ und NO₂⁻) werden noch weitere Effekte (chemisch und biologisch) beobachtet, die zur Förderung der Wasserorganismen und zur Stabilisierung der Wasserchemie beitragen:
1. Stabilisierung der Karbonathärte und damit des pH-Wertes/Bereichs,
2. Freisetzung von CO₂ durch ständige Oxidation von PCL (durch O₂ und/oder Nitrat),
3. Förderung des Wasserpflanzenwuchses und der Nitrifikation, und
4. leichte bis moderate Senkung der Phosphatkonzentration.

### Einsatzgebiete der beschriebenen Mittel und Verfahren

Aufgrund der sehr guten Verträglichkeit und der sehr geringen Toxizität von PCL sind folgende Einsatzgebiete denkbar:
1. Aufbereitung von Aquarienwasser (Süß- und Salzwasser) im Heim und professionellen Bereich.
2. Aufbereitung von Gartenteichwasser.
3. Aufbereitung von Wasser in Aquaterrarien, z. B. zur Haltung von Wasserschildkröten.
4. Sanierung von eutrophierten natürlichen Gewässern.
5. Aufbereitung von Süß- und Salzwasser in Großaquarien, Becken, Teichen, Tanks in öffentlichen Aquarien, Zoo's, in der Fischintensivhaltung, in der Shrimpshaltung und -zucht.
6. Aufbereitung von N/ Ammoniak-reichen Abwässern aus der Milch-, Fleisch-, Lebensmittelindustrie, Brauerei, Landwirtschaft (Tierintensivhaltung), Lederindustrie und anderen Industriezweigen mit vergleichbaren Abwasserproblemen.

Generell lassen sich aus allen Wässern überschüssige anorganische N-Verbindungen eliminieren. Die gereinigten Wässer besitzen eine erhöhte Wasserqualität und Organismen- sowie Abwasser- und Umweltverträglichkeit.

### Zusammenfassung der beschriebenen Mittel und Verfahren

### Beschriebene Mittel

Es findet vorteilhaft ein Granulat aus Polycaprolacton, Reinheit > 99 %, ca. 4 mm, Verwendung.

Eingesetzt werden können aber auch alle technologisch sinnvollen Herstellungsvarianten, wie z. B. Spritzgußformen, die sich aus PCL herstellen lassen, z. B.
- Kugeln, Zylinder, Würfel, Quader u. a., glatt oder mit beliebiger innerer und äußerer Oberflächengestaltung,
- Extrudate, wie z. B. Stangen, Fäden, Gespinste, Hohlröhren u. a. Hohlprofile,
- Blasformen, wie Schläuche, Folien usw.

### Beschriebene Verfahren

Die erhaltenen PCL-Körper werden nach den in der Beschreibung definierten Dosierungsangaben zur Senkung der Nitrat-, Ammoniak- und Nitritkonzentration im Wasser aquaristischer Hälterungssysteme und anderen wäßrigen Systemen eingesetzt.

### Vermischen mit Kies oder allgemein Bodengrund

In Kies der Körnung 2 - 6 mm werden PCL-Granulate, Formkörper in der Dosierung 20g/100 l bis 200 g/100 I Wasser, vorzugsweise 60 g/100 I bis 120 g/100 I Wasser eingemischt, um den Nitratgehalt auf niedrige bzw. niedrigere Konzentrationen zu senken und zu stabilisieren.

### Einsatz in Filtersystemen

PCL-Granulate, Formkörper werden im Filterhauptstrom (Durchfluß 30 - 1000 l/h, vorzugsweise 50 - 500 l/h) in Filterkammern, Vliesbeuteln, Gazebeuteln oder anderen wasserdurchlässigen Behältnissen eingesetzt:
a) Zur Senkung des Nitratgehaltes:
   20 g/100 l bis 200 g/100 I Wasser, vorzugsweise 60 g/100 I bis 120/100 I Wasser.
b) Zur Senkung des Ammoniak-, Nitrit (und Nitrat)-Gehaltes:
   50 g/100 l bis 500 g/100 l Wasser, vorzugsweise 100 g/l bis 250 g/100 I Wasser.

Die oben beschriebenen Verwendungen von PCL-Granulat, vermischt mit dem Bodengrund und in aeroben Filtersystemen, erfordern einen gewissen Wartungsaufwand und beinhalten eine z. T. nicht erwünschte Manipulation bei der Erstanwendung bzw. Nachdosierung:
a) Das PCL wird über 6 - 12 Monate allmählich durch oxidative mikrobiologische Prozesse abgebaut. Die daraus resultierende Minderung der Nitratabbauleistung erfordert eine z. T. unbequem handhabbare Nachdosierung.
b) Besonders die Nachdosierung in den Bodengrund ist im eingerichteten Aquarium nicht einfach durchführbar.
c) Zur Erhaltung bzw. Korrektur der Nitratabbauleistung sollte in gewissen Abständen, z. B. einmal monatlich, der Nitratgehalt des Wassers gemessen werden, um bei einem Wiederanstieg der Nitratkonzentration durch Nachdosierung die gewünschte Nitratsenkung einzuhalten bzw. zu steigern.

Diese Handhabungsnachteile können durch die im Folgenden beschriebenen alternativen Mittel und Verfahren umgangen werden.

Verwendung von PCL-Pulver als nitratsenkender Wasserzusatz:
Verwendet man anstelle von PCL-Granulat das wesentlich reaktivere PCL-Pulver und setzt das Pulver in periodischen Dosierungen einfach dem Hälterungswasser zu, so findet man überraschenderweise, daß diese Behandlung zu einer zuverlässigen, dosierungsabhängigen und dauerhaften Nitratsenkung führt.

Die wöchentliche Dosierung des PCL-Pulvers reicht dabei völlig aus.

Das dem Hälterungswasser zugemischte, im Wasser unlösliche und lediglich suspendierte PCL-Pulver wird zum Teil von dem Filtersystem angesaugt, und gelangt zum Teil zwischen die Bodengrundpartikel (Sand, Kies), um dort unter weitgehend aeroben Bedingungen die Nitratsenkung zu bewirken, deren Resultate im Folgenden beschrieben werden.

Einbringung verschiedener Dosierungen an PCL-Pulver in das Hälterungswasser:
Zu Aquarien mit gängigen Hälterungsbedingungen und durchschnittlichem Pflanzen- und Fischbesatz wurden einmal pro Woche folgende Mengen an PCL-Pulver zudosiert und mit dem Wasser leicht vermischt:
   a) 0 mg/l PCL-Pulver (Kontrolle)
   b) 5 mg/l PCL-Pulver
   c) 10 mg/l PCL-Pulver
   d) 20 mg/l PCL-Pulver

Über eine Versuchszeit von 24 Wochen wurden folgende dosisabhängige Nitratkonzentrationen ermittelt:
a) (Kontrolle) Stetiger Nitratanstieg von 23 mg/l bis 232 mg/l.
b) (5 mg/l) Nitratanstieg von 22 mg/l bis 74 - 76 mg/l nach 12 Wochen, danach bis 24 Wochen kein weiterer Nitratanstieg mehr.
c) (10 mg/l) Nitratanstieg von 22 mg/l bis 43 mg/l nach 24 Wochen. Ein Zwischenmaximum von 54 mg/l wurde nach 6 Wochen erreicht, darauf Senkung des Nitratgehaltes auf 43 mg/l.
d) (20 mg/l) Über ein Maximum von 38 mg/l nach 4 Wochen senkte sich der Nitratgehalt bis auf 6 mg/l nach 24 Wochen.

Aus dem Versuch wurde abgeleitet, daß eine praxisgerechte Dosierung von 10 mg/l PCL-Pulver pro Liter Wasser ausreicht, um den Nitratgehalt über lange Zeiträume nicht über 40 - 50 mg/l ansteigen zu lassen.

Wichtige Vorteile des neuen, erfindungsgemäßen Verfahrens sind die einfache Handhabung (einfache Dosierung der empfohlenen Menge einmal wöchentlich) und die wartungs- und kontrollfreie Nitratsenkung über beliebig lange Zeiträume.

Durch Variation der Dosierung läßt sich der gewünschte, langzeitstabile Nitratpegel leicht anpassen, z. B. auch an die Besatzdichte mit Fischen.

Dosierung von 10 mg/l PCL-Pulver unter verschiedenen Wasserverhältnissen:
Die als praxisgerecht eingestufte wöchentliche Dosierung von 10 mg/l PCL-Pulver wurde unter verschiedenen Hälterungsbedingungen einem Langzeittest unterzogen. Variiert wurde die Karbonathärte (KH) des Wassers.

Der folgende Versuch wurde bei KH 2 °dH und KH 11 °dH durchgeführt. (Versuchsdauer 20 Wochen.)

Zu den Versuchsaquarien mit gängigen Hälterungsbedingungen und durchschnittlichem Pflanzen- und Fischbesatz, die sich lediglich im Wasserchemismus (KH) unterschieden, wurden einmal pro Woche 10 mg/l PCL-Pulver zudosiert und mit dem Hälterungswasser leicht vermischt. Über die Versuchszeit von 20 Wochen wurden folgende Nitratkonzentrationen gemessen:

### a) Weiches, mineralarmes Wasser (Karbonathärte: ca. 2 °dH)

Kontrolle (ohne Dosierung von PCL-Pulver): Stetiger Nitratanstieg von 2,5 mg/l bis auf 150 mg/l nach 20 Wochen.
   Die getesteten PCL-Varianten unterschieden sich - bei gleicher PCL-Dosierung von 10 mg/l - lediglich in der Konzentration an Karbonathärte-Additiv, welches auf den Nitratabbau keinen Einfluß hat.
Variante A (10 mg/l PCL-Pulver): Von 2,5 mg/l über ein Maximum von 25 mg/l nach 6 Wochen fiel der Nitratgehalt bis auf 10,5 mg/l nach 20 Wochen.
Variante B (10 mg/l PCL-Pulver): Von 2,4 mg/l über ein Maximum von 26 mg/l nach 8 Wochen fiel die Nitratkonzentration wieder auf 14,3 mg/l.

### b) Mittelhartes Leitungswasser (Karbonathärte: ca. 11 °dH):

Kontrolle (ohne Dosierung von PCL-Pulver): Die Nitratkonzentration stieg von 25,5 mg/l stetig bis auf 170 mg/l nach 20 Wochen.
Variante A (10 mg/l PCL-Pulver): Von 25,4 mg/l NO₃⁻ stieg der Nitratgehalt auf ein Maximum von 30 mg/l nach 3 Wochen und sank dann stetig auf 14,3 mg/l nach 20 Wochen.
Variante B (10 mg/l PCL-Pulver): Von 25,4 mg/l NO₃⁻ stieg der Nitratgehalt auf 32 mg/l nach 3 Wochen und fiel dann auf 12,4 mg/l nach 20 Wochen ab.

### Erfindungsgemäße Anwendung, Applikationsarten:

Die Verwendung des PCL-Pulvers zur Nitratsenkung in Hälterungswasser kann in verschiedenen Applikationsformen erfolgen:
a) Reines PCL-Pulver in trockener Form. Zur Dosierung und Abmessung kann ein Meßlöffel eingesetzt werden.
b) Wäßrige Suspension von PCL-Pulver in definierter Zusammensetzung. Der Suspension werden nach dem Stand der Technik bekannte Suspensionsstabilisaboren zugesetzt, z. B. ein verdickend wirkendes Hydrokolloid. Beispiel: Xanthan in geeigneter Menge. Die Menge an suspendiertem PCL-Pulver im Produkt wird bestimmt aus der Produktdosierung, z. B. in einem Milliliter Produktsuspension pro 4 Liter Hälterungswasser und der gewünschen Dosierung an PCL-Pulver.
   Ein typisches Beispiel wäre eine wäßrige, stabilisierte Suspension, enthaltend 40 g PCL-Pulver pro Liter. Um eine wöchentliche Dosierung von 10 mg/l PCL-Pulver im Hälterungswasser zu erreichen, muß 1 ml der Suspension pro 4 I Wasser dosiert werden.
c) Wäßrige Suspension von PCL-Pulver in definierter Zusammensetzung, der weitere funktionale Additive zugesetzt sind. Als besonders vorteilhaft hat es sich herausgestellt, wenn PCL-Pulver und ein Suspensionsstabilisator einem multifunktionalen flüssigen Produkt zugesetzt wird, wie es in WO 01/21533 beschrieben wird.
   Neben Natriumcitrat, Citronensäure, Eisencitrat, Citratokomplexen von Spurenelementen und B-Vitaminen, Saccharose werden der Produktlösung 40 g/l PCL-Pulver zugesetzt. Der Zusatz des PCL-Pulvers verbessert die nitratsenkende Wirkung des in WO 01/21533 beschriebenen multifunktionalen Produktes signifikant, verbessert dadurch die erreichbare Wasserqualität in einem nicht dagewesenen Ausmaß und komplettiert das Wirkungsspektrum auch mit einen sehr guten Nitratabbau. Damit wird das Produkt erheblich verbessert und erlaubt, noch über längere Perioden auf einen Wasserwechsel im Aquarium (auch über 6 Monate hinaus) verzichten zu können.

Zusammenfassung des auf PCL-Pulver beruhenden Verfahrens:
Dem Hälterungswasser werden periodisch, z. B. täglich, alle 2 oder 3 Tage, wöchentlich, alle 2 Wochen, monatlich, vorzugsweise wöchentlich, 1 mg/l bis 100 mg/l, vorzugsweise 5 mg/l bis 20 mg/l an PCL-Pulver zugesetzt.

Das beschriebene Mittel kann PCL-Pulver selbst sein und/oder alle denkbaren, PCL-Pulver enthaltenden Zubereitungen beinhalten, die funktional und technologisch sinnvoll und machbar sind, z. B.
- wäßrige Suspensionen,
- Suspensionen in anderen funktionalen Flüssigprodukten, z. B. wie in WO 01/21533 beschrieben.

Die Zubereitungen können beliebige Additive, z. B. Suspensionsstabilisatoren, Verdicker, Farb- und Geruchsstoffe u. a. Stoffe gemäß dem Stand der Technik enthalten.

Wie bereits bei der Anwendung von PCL-Granulat beschrieben, kann die Zudosierung, Einbringung von PCL in Hälterungssysteme neben der Senkung von Nitrat auch die Senkung von Ammoniak und Nitrit bewirken.

Bei der Anwendung von PCL-Pulver werden entsprechende Konzentrationssenkungen von Ammoniak und Nitrit ebenfalls in vergleichbarer Effektivität beobachtet.

Besonders vorteilhaft zeigen sich dabei erhöhte Dosierungen an PCL-Pulver, z. B. 10 - 100 mg/l wöchentlich, vorzugsweise 20 - 80 mg/l wöchentlich.

### Nicht beanspruchte

Verwendung weiterer PCL-Applikationsformen mit großer Oberfläche:
Die oben beschriebene Anwendung zur Senkung von Nitrat, mit den Extremen, PCL-Granulat mit relativ kleiner Oberfläche einerseits und PCL-Pulver mit extrem großer Oberfläche andererseits , macht deutlich, daß sich alle denkbaren Applikationsformen von PCL, deren Oberfläche ähnlich groß ist wie bei PCL-Pulver oder zwischen Pulver und Granulat liegt, ebenfalls zur Anwendung in Hälterungssystemen eignen, um ähnliche, vergleichbare Effekte zu erreichen.

Ergänzend zu den bereits in der Erstanmeldung beschriebenen Applikationsformen bzw. technologisch sinnvollen Herstellungsvarianten kann PCL in weiteren Varianten, besonders mit großer Oberfläche, in Hälterungssystemen zur Senkung der Konzentrationen von Nitrat und auch Ammoniak und Nitrit eingesetzt werden, z. B.
- als Vlies, Fadengewirr,
- als Schaum mit verschiedenen Porengrößen, z. B. ppi 5 bis ppi 50, wobei der PCL-Schaum nach üblichen Verfahren nach dem Stand der Technik hergestellt wird,
- als PCL-Coating von Stoffen mit großer Oberfläche, d. h. als aufgebrachte PCL-Schicht auf mineralischen, organisch-natürlichen, organischsynthetischen Materialien,
- als PCL-Coating von porösen Materialien (organisch, anorganisch) durch Einbringung von dünnen PCL-Schichten auf und in diese Materialien,- als feine Folienflitter,
- als dünne PCL-Überzüge auf beliebigen, unnatürlichen, nichtlebenden Dekorationsartikeln in Aquarien, z. B. auf Steinen, Wurzeln, Figuren,
- als dünne PCL-Überzüge auf Plastikpflanzen, Filterwatte.

Dünne PCL-Überzüge lassen sich beispielsweise durch Dippen, Tauchen der Materialien in flüssiges PCL (FP ≈ 60 °C!) leicht herstellen. Nach dem Abkühlen der getauchten Materialien erstarrt der PCL-Film zu einem dünnen, festen Überzug.

Die Dosierung von PCL in den beschriebenen Applikationsformen mit großer Oberfläche beträgt in den Hälterungssystemen, z.B. Aquarien, 1 g bis 200 g pro 100 l Wasser, vorzugsweise 10 g bis 100 g pro 100 l Wasser.

## Patentansprüche

1. Verwendung von Polycaprolacton zur Entfernung oder Reduktion anorganischer Stickstoffverbindungen unter aeroben Bedingungen aus bzw. in biologischen Hälterungswässern, **dadurch gekennzeichnet, dass** Polycaprolacton in Pulverform oder als Suspension eines Pulvers dem Hälterungswasser zudosiert wird.

2. Verwendung nach Anspruch 1, wobei die anorganische Stickstoffverbindung ein Nitrat ist.

3. Verwendung nach Anspruch 1, **dadurch gekennzeichnet, dass** das pulverförmige Polycaprolacton in Form einer pastenförmigen Zubereitung dem Hälterungswasser zudosiert wird.

4. Verwendung nach einem der Ansprüche 1 oder 2, **dadurch gekennzeichnet, dass** das PCL-Pulver in trockener Form zudosiert wird.

5. Verwendung nach einem der Ansprüche 1 oder 2, **dadurch gekennzeichnet, dass** das PCL-Pulver in wässriger Suspension zusammen mit Suspensionsstabilisatoren, Verdickern, Farbstoffen, und/oder Geruchsstoffen zudosiert wird.

6. Verwendung nach einem der Ansprüche 1, 2 oder 5, **dadurch gekennzeichnet, dass** das PCL-Pulver in 40g/l Suspension zusammen mit Natriumcitrat, Citronensäure, Eisencitrat, Citratokomplexen von Spurenelementen und B-Vitaminen, und Saccharose zudosiert wird.

7. Verwendung nach einem der vorherigen Ansprüche, **dadurch gekennzeichnet, dass** 1 mg/l bis 100 mg/l Polycaprolacton alle 2 Tage, alle 3 Tage, einmal pro Woche, alle zwei Wochen, oder monatlich dem Hälterungswasser zudosiert wird.

8. Verwendung nach Anspruch 7, **dadurch gekennzeichnet, dass** das Polycaprolacton in einer Menge von 5 mg/l bis 20 mg/l dem Hälterungswasser zudosiert wird.

9. Verwendung nach Anspruch 8, **dadurch gekennzeichnet, dass** das pulverförmige Polycaprolacton periodisch in einer Menge von 5 bis 20 mg/l Wasser dem Hälterungswasser zudosiert wird.

10. Verwendung nach Anspruch 9, **dadurch gekennzeichnet, dass** das pulverförmige Polycaprolacton einmal pro Woche in einer Menge von 5, 10 oder 20 mg/l dem Hälterungswasser zudosiert und mit dem Wasser leicht vermischt wird.

11. Verwendung nach einem der Ansprüche 1 bis 6, **dadurch gekennzeichnet, dass** das Polycaprolacton in Pulverform einmal pro Woche in einer Menge von 10-100 mg/l, vorzugsweise 20-80 mg/l, dem Hälterungswasser zudosiert wird.

12. Verwendung nach einem der Ansprüche 1-2 oder 5-11, wobei das Polycaprolacton in Form einer wässrigen, stabilisierten Suspension dem Hälterungswasser zudosiert wird, wobei die Suspension 40 g PCL-Pulver pro Liter enthält.

## Claims

1. A use of polycaprolactone for removing or reducing inorganic nitrogen compounds from or in biological fish keeping waters under aerobic conditions, **characterized in that** the polycaprolactone is added in powder form or as a suspension of a powder to the fish keeping water.

2. The use according to claim 1, **characterized in that** the inorganic nitrogen compound is nitrate.

3. The use according to claim 1, **characterized in that** polycaprolactone in powder form is added to the fish keeping water in the form of a pasty preparation.

4. The use according to any one of claims 1 or 2, **characterized in that** the PCL powder is added in dry form.

5. The use according to any one of claims 1 or 2, **characterized in that** the PCL powder is added in an aqueous suspension along with suspension stabilizers, thickeners, coloring agents and/or odorants.

6. The use according to any one of claims 1, 2 or 5, **characterized in that** the PCL powder is added in a 40g/l suspension along with sodium citrate, citric acid, iron citrate, citrate complexes of trace elements and vitamins B, and sucrose.

7. The use according to any one of the preceding claims, **characterized in that** 1 mg/l to 100 mg/l polycaprolactone are added to the fish keeping water every 2 days, every three days, once a week, every two weeks or monthly.

8. The use according to claim 7, **characterized in that** polycaprolactone is added to the fish keeping water in an amount of 5 mg/l to 20 mg/l.

9. The use according to claim 8, **characterized in that** the polycaprolactone in powder form is periodically added to the fish keeping water in an amount of 5 to 20 mg/l of water.

10. The use according to claim 9, **characterized in that** the polycaprolactone in powder form is added to the fish keeping water once a week in an amount of 5, 10 or 20 mg/l and is gently mixed with the water.

11. The use according to any one of claims 1 to 6, **characterized in that** the polycaprolactone in powder form is added once a week to the fish keeping water in an amount of 10 - 100 mg/l, preferably 20 - 80 mg/l.

12. The use according to any one of claims 1 to 2 or 5 to 11, wherein polycaprolactone in the form of an aqueous, stabilized suspension is added to the fish keeping water, the suspension containing 40 g of PCL powder per liter.

## Revendications

1. Utilisation de polycaprolactone pour l'élimination ou la réduction de liaisons d'azote inorganiques en conditions d'aérobie hors de ou dans des eaux de pisciculture, **caractérisée en ce que** du polycaprolactone sous forme de poudre ou comme suspension d'une poudre est adjoint à l'eau de pisciculture.

2. Utilisation selon la revendication 1, sachant que la liaison d'azote inorganique est un nitrate.

3. Utilisation selon la revendication 1, **caractérisée en ce que** le polycaprolactone sous forme de poudre est adjoint à l'eau de pisciculture sous forme de préparation en forme de pâte.

4. Utilisation selon l'une des revendications 1 ou 2, **caractérisée en ce que** la poudre de PCL est adjointe sous forme sèche.

5. Utilisation selon l'une des revendications 1 ou 2, **caractérisée en ce que** la poudre de PCL est adjointe en suspension aqueuse conjointement avec des stabilisateurs de suspension, des épaississants, des colorants, et/ou des substances odorantes.

6. Utilisation selon l'une des revendications 1, 2 ou 5, **caractérisée en ce que** la poudre de PCL est adjointe en suspension de 40 g/l conjointement avec du citrate de sodium, de l'acide citrique, du citrate de fer, des citratocomplexes d'oligoéléments et de vitamines B, et de la saccharose.

7. Utilisation selon l'une des revendications précédentes, **caractérisée en ce qu'**une quantité de 1 mg/l à 100 mg/l de polycaprolactone est adjointe à l'eau de pisciculture tous les 2 jours, tous les 3 jours, une fois par semaine, toutes les deux semaines, ou mensuellement.

8. Utilisation selon la revendication 7, **caractérisée en ce que** le polycaprolactone est adjoint à l'eau de pisciculture dans une quantité de 5 mg/l à 20 mg/l.

9. Utilisation selon la revendication 8, **caractérisée en ce que** le polycaprolactone sous forme de poudre est adjoint à l'eau de pisciculture périodiquement dans une quantité de 5 à 20 mg/l d'eau.

10. Utilisation selon la revendication 9, **caractérisée en ce que** le polycaprolactone sous forme de poudre est adjoint à l'eau de pisciculture une fois par semaine dans une quantité de 5, 10 ou 20 mg/l et légèrement mélangé à l'eau.

11. Utilisation selon l'une des revendications 1 à 6, **caractérisée en ce que** le polycaprolactone sous forme de poudre est adjoint à l'eau de pisciculture une fois par semaine dans une quantité de 10-100 mg/l, de préférence de 20-80 mg/l.

12. Utilisation selon l'une des revendications 1-2 ou 5-11, sachant que le polycaprolactone est adjoint à l'eau de pisciculture sous forme d'une suspension aqueuse stabilisée, sachant que la suspension contient 40 g de poudre de PLC par litre.
